Europäisches Patentamt

European Patent Office

Office européen des brevets

(11) Publication number: **0 153 102**
**B1**

# EUROPEAN PATENT SPECIFICATION

(45) Date of publication of patent specification: **26.07.89**

(51) Int. Cl.⁴: **A 01 B 63/111**

(21) Application number: **85300841.5**

(22) Date of filing: **08.02.85**

(54) **Ground-working depth control system for a vehicle.**

(30) Priority: **10.02.84 US 578902**

(43) Date of publication of application:
**28.08.85 Bulletin 85/35**

(45) Publication of the grant of the patent:
**26.07.89 Bulletin 89/30**

(84) Designated Contracting States:
**AT BE CH DE FR GB IT LI NL SE**

(56) References cited:
**EP-A-0 043 725**
**EP-A-0 102 766**
**AU-B- 556 407**
**DE-C-2 927 585**
**US-A-4 064 945**
**US-A-4 132 272**
**US-A-4 132 273**

(73) Proprietor: **DEERE & COMPANY**
**1 John Deere Road**
**Moline Illinois 61265 (US)**

(72) Inventor: **Kasten, Robert Eugene**
**3531-51st Street**
**Moline Illinois 61265 (US)**

(74) Representative: **Pears, David Ashley et al**
**REDDIE & GROSE 16 Theobalds Road**
**London WC1X 8PL (GB)**

Courier Press, Leamington Spa, England.

## Description

This invention relates to a depth control system for a vehicle pulling a ground working implement, comprising a servo-system responsive to at least one sensed operating parameter of the system comprising the implement and means connecting the implement to the vehicle to provide a control signal to control actuating means which adjust the working depth of the implement.

Many draft control systems are known. DE AS 2 927 585 describes a system with control dependent upon the rate of change of the load signal, i.e. the servo-system has rate-control.

The quality of operation of conventional hitch control systems, such as draft and/or position-responsive systems, may vary, depending upon the particular implement being used or upon the particular soil conditions encountered. For example, a particular control system with a fixed gain may operate sluggishly under relatively loose soil conditions, whereas the same control system may cause undesirably rapid, violent or unstable hitch and implement motions when working in relatively stiff soil conditions. One solution would be to provide a variable gain control which can be adjusted by the vehicle operator to optimise performance under various conditions. Thus US 4 064 945 discloses a draft control system with a sensitivity adjustment. However, it is desirable to provide hitch or implement control systems which automatically compensates for varying conditions without increasing the level of skill or effort required of the operator. One such automatically compensating system is described in AU—B—556 407. This prior control system requires an operator-adjustable draft setting or load command knob in addition to a position command lever. It is further desirable to provide an automatically compensating implement control system which is simpler with respect to the number of operator controls required and with respect to algorithm complexity.

An object of the present invention is to provide a depth control system which automatically compensates for variations in soil conditions and/or implement characteristics.

The invention is characterised in that the servo system is arranged to superimpose upon the control signal a periodic, time-varying auxiliary signal, to determine automatically a response characteristic of the servo system and actuating means to the auxiliary signal, the response characteristic having a certain frequency relationship to the auxiliary signal and automatically to adjust a variable gain which influences the control signal in response to changes in the response characteristic.

Effectively the control system measures a time varying component of a soil/implement "gain" and uses this measurement to compensate an electronic gain and thereby maintain a constant system response.

The preferred embodiment of the invention includes means for generating a rockshaft valve control signal as a function of sensed draft force, rockshaft position and operator inputs. Periodically, an auxiliary or disturbance signal of certain amplitude, frequency and duration is superimposed on the valve command signal. A calculated soil/implement gain is derived from components of the valve command signal and the measured draft force which have certain phase relationships with the disturbance signal. These components are derived by a technique which is analogous to a standard Fourier analysis technique. An electronic gain is modified so that the overall soil/implement gain remains substantially constant.

The invention will be described in more detail, by way of example and with reference to the accompanying drawings, in which:

Figure 1 is a schematic drawing of an agricultural vehicle, hitch and implement suitable for use with the present invention.

Figures 2a—f are simplified flow charts bf the algorithm performed by the central control unit of the present invention.

Figure 3 is a waveform diagram illustrating the behaviour over time of a disturbance signal which is used in the present invention.

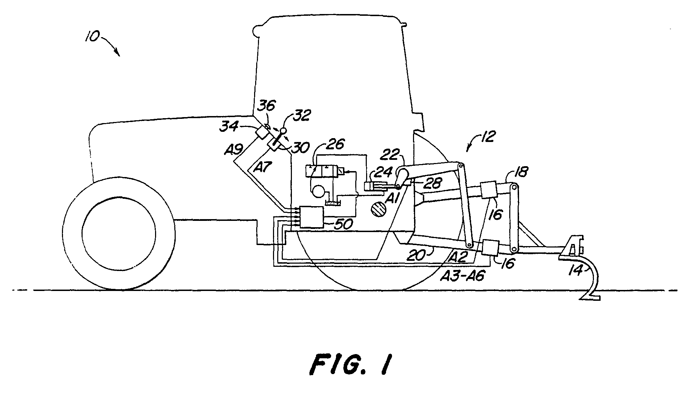

An agricultural tractor 10 includes a conventional hitch 12, such as a three-point hitch, for coupling to a conventional ground-engaging implement 14, such as an integrally-mounted chisel plow. Draft forces generated by the plow-ground interaction are sensed by conventional draft sensors 16, such as strain gauges, variable transformer draft sensors, such as are described in EP 0 082 686. For example, five draft sensors could be used, one inserted in the centre link 18 and two inserted in each of the draft links 20, one of which is visible in Figure 1. The draft sensors 16 generate three separate signals having scalar values A(2) to A(6). The hitch 12 includes a conventional rockshaft 22 which is rotated by one or more connected hydraulic cylinders 24 to raise and lower the hitch 12 and implement 14. The cylinders 24 may be controlled by a known electrically-operated control valve 26, such as a Moog series 72 servo valve. A potentiometer-type sensor 28 senses the position of the rockshaft 22 and generates a signal A(1) which represents the position of the rockshaft 22 and thereby represents the position of the implement 14. A two-position switch 30 generates a two-level raise and lower signal A(7) which is used to raise and lower the implement at headlands in response to raise/lower lever or control device 32. A potentiometer 34 generates a position or depth command signal A(9) as a function of position control knob 36. The operator-controlled devices 32 and 34 may be positioned at any convenient location in the operator's compartment of the tractor.

The signals from the sensors 16, 28 and 34 and from switch 30 are communicated to an electronic control unit 50 which generates valve control signals which are communicated to the control valve 26. The control unit 50 could include a conventional analog-to-digital converter (not shown) for converting the signals from sensors 16, 28 and 34 to digital representations thereof, a conventional microprocessor (not shown) and a conventional digital-to-analog converter and power amplifier (not shown) for converting the digital control signal, HVCO, from the microprocessor to an analog voltage or current which is then applied to the control valve 26. The control signal, HVCO, is generated as a function of the sensed inputs according to an operational program or algorithm.

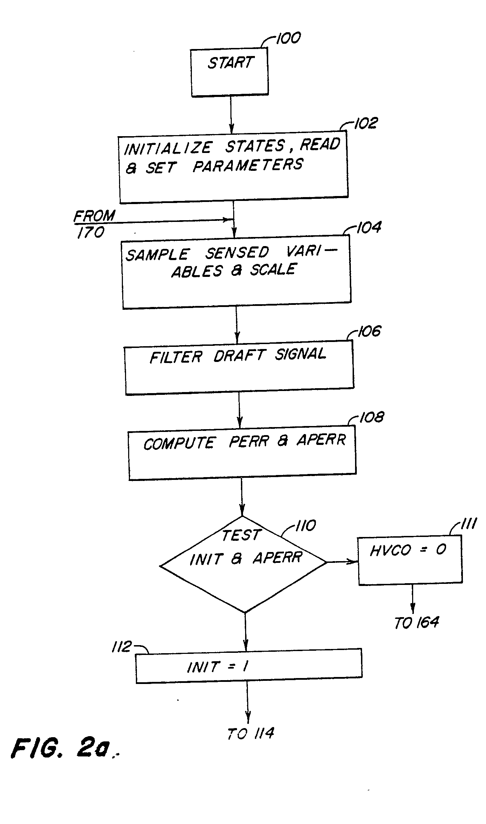

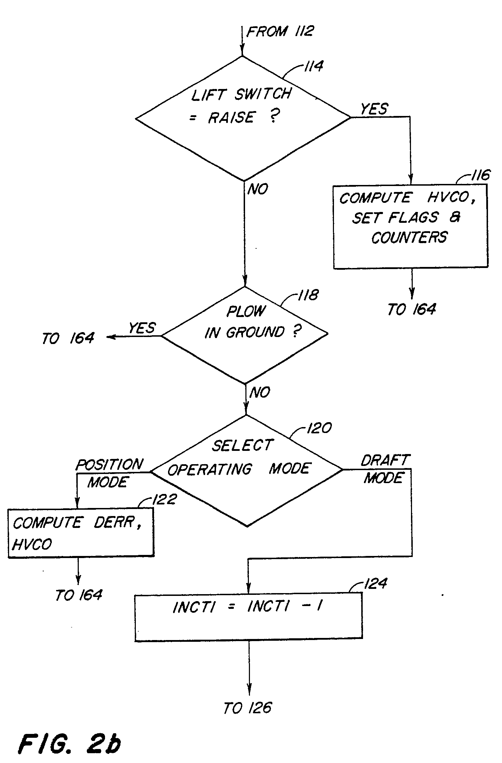

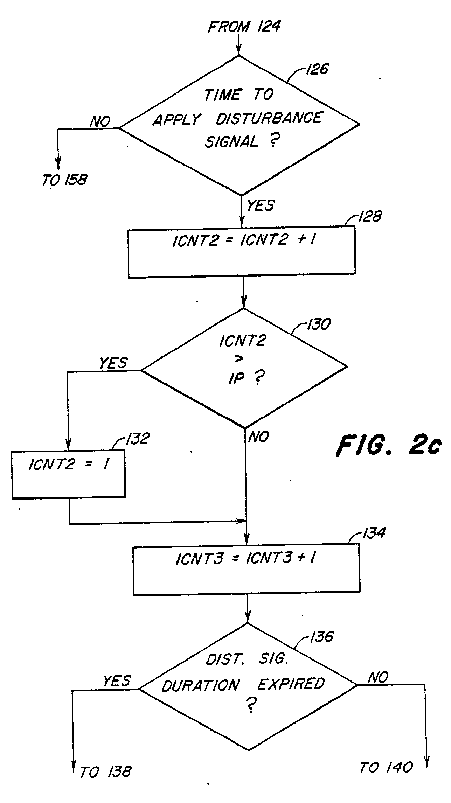

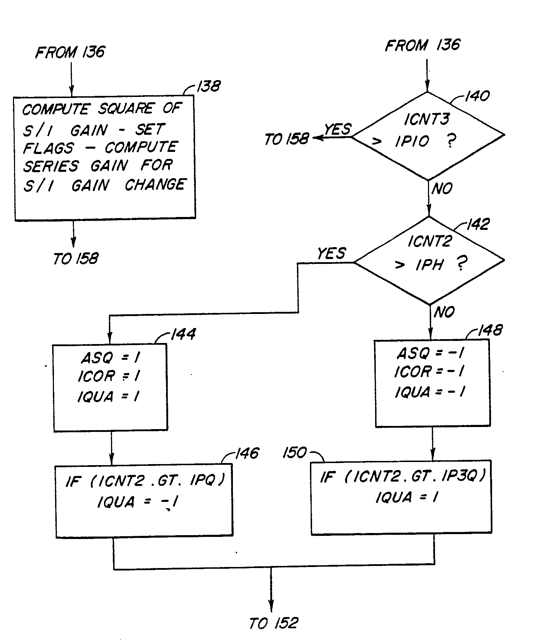

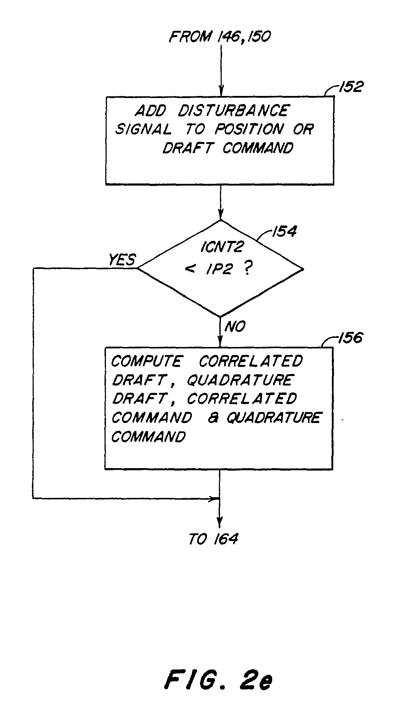

This control algorithm will now be described with reference to the flow charts shown in Figures 2a—2f and with reference to the source language (Fortran) computer program listing at the end of this description. The parenthetical numbers within this description correspond to the line or statement numbers of the portions of the program listing.

The algorithm begins at step 100 (1—19), whereupon various commons are defined and array areas are established. Then, in the portion of the algorithm represented by block 102 (20—76, 77—212), various states are initialized and parameters are read and set. Then, at 104 (212—276), the variables A1—A9 are sensed and scaled to engineering units. Then, at 106 (396—402), a set of filtered draft force values, FDRFT, FDRF2 and FDRF3 are derived from the sensed draft force using filtering time constants of .06 seconds, .33 seconds and .1 second, respectively. FDRFT is used in the draft force feedback value in the control loop. FDRF2 is used in calculating the draft command set point (line 458). FDRF3 is used in the calculation of the correlated and quadrature values in later step 156. Then, at step 108 (407—410), a position error value, PERR, is calculated to represent a difference between the sensed rockshaft position and the position of knob 36. Also, an intermediate value, APERR, is calculated.

Steps 110 (411, 412), 111 (411) and 112 (413) operate upon system start-up to prevent hitch movement unless the position control knob 36 is first moved to a "synchronized" position corresponding to the actual sensed rockshaft position and then moved away from the "synchronized" position. Hitch movement is prevented in step 111 (411) by setting the hitch command value, HVCO, equal to zero and then directing the algorithm to step 164. Otherwise, the algorithm proceeds to step 112 (413) where the INIT flag value is set equal to 1 to indicate initial "synchronization" of the rockshaft 22 and position control knob 36.

Block or step 114 (415—416) tests whether the switch 30 is in the "raise" position. If not, the algorithm is directed to step 118 (434—436). If yes, the algorithm proceeds to step 116 (417—433) where an HVCO value is calculated to cause the hitch to raise to a 70 degree angle with respect to horizontal and where various variables are set for future gain calculations, after which the algorithm proceeds to step 164.

Step 118 (434—436) determines whether or not the implement 14 has entered the ground by comparing the sensed draft force to some threshold value. If the implement has entered the ground, the algorithm proceeds to step 164. Otherwise, the algorithm proceeds to step 120.

Step 120 (437—480) operates to select or establish the proper draft or position operating mode, depending upon the operator input to position control knob 36. For example, this portion of the algorithm detects whether the operator has moved the position control knob 36 and if so, establishes a position control mode. Otherwise, a draft control mode is established.

If the position control mode is established, then the algorithm proceeds to step 122 (480—485) where the valve command HVCO is derived from a position error value, DERR, after which the algorithm proceeds to step 164.

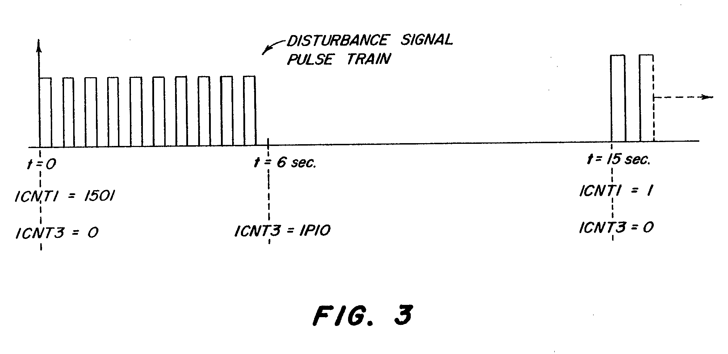

If the draft control mode is established, then the algorithm proceeds to step 124 (485) which decrements the ICNT1 value, which is a counter value used to determine how often a pulse train (see Figure 3) of a square wave auxiliary or disturbance signal is superimposed (at step 152) on the normal HVCO signal which is sent to the control valve 26. The disturbance signal has an amplitude, G1, which is preferably equal to 10% of the maximum amplitude of the HVCO signal which can be applied to the control valve 26. In this case, it is preferred that the disturbance signal be applied for a period of 6 seconds, starting at the beginning of a 15 second timing cycle. It should be noted that a square wave disturbance signal is preferred because such a signal is simply represented in the software domain, as are the square wave "Walsh" functions which are described later. However, periodic functions with non-square wave waveforms could be used, if desired.

After step 124, the algorithm proceeds to step 126 (486) which determines if it is the proper time to apply the disturbance signal by examining an "IFLAG" flag value. If the IFLAG value is set equal to 1, as in statement line 519, then the algorithm is directed to step 158 and normal draft control is continued and the disturbance signal is not applied. If IFLAG=0 (as set in statement lines 466 and 529), then it means that the 15 second timing cycle has started over and it is time to begin applying the disturbance signal and the algorithm is directed to steps 128—132.

Steps 128—132 (487—488) increment and control an ICNT2 counter value which is used to control the frequency (preferably 1.67 Hz) of the pulse train which comprises the disturbance signal.

Step 134 (489) increments an ICNT3 counter value which is used to control the duration of the disturbance signal pulse train (preferably 6 seconds or 10 cycles of a 0.6 second period square wave). Then, step 136 (490) determines if the duration of the disturbance signal has expired (by comparing ICNT3 to a value representing 6 seconds). If the duration is complete, the algorithm is directed to step 138 (512—519) which sets appropriate flags and calculates a GNSQ value which is the square of a measured soil/implement gain value which is proportional to the ratio of a change in draft force to the corresponding change in rockshaft angle using the correlated and quadrative draft and command values determined in later step 156. Also, in step 138, a series or adaptive gain value, GAIN3, is calculated for use in

3

compensating for the change in the measured soil/implement gain using the GNSQ value and an experimentally determined gain factor, G2, preferably equal to .0005. After step 138, the algorithm proceeds to step 158. If, in step 136, the duration of the disturbance signal has not expired, then the algorithm is directed to step 140 (491), which merely provides a redundant path to step 158.

Next, in step 142 (492), the ICNT2 counter value is compared to an IPH value which represents 1/2 of a period of the disturbance signal. Thus, step 142, together with steps 144, (498—500), 146 (501), 148 (493—495) and 150 (496), alternates the values of a set of variables representing the sign of the disturbance signal and representing a pair of Walsh functions, W and Wb, the Wa Walsh function being in phase with the disturbance signal. These Walsh functions are utilized in a calculation of a set of draft force amplitude coefficients at the disturbance frequency. From steps 146 and 150, the algorithm is directed to step 152.

In step 152 (502—504), the disturbance signal (with magnitude G1 and sign ASQ) is added to the calculated position command value ZPOS to obtain the valve command signal, HVCO. One equation, (502), is used if the control system is operating under position control. Another equation (503 and 504) is used if the control system is operating under draft control. In this manner, the effect of the disturbance signal is greater when the control system is operating under draft control.

Step 154 (505) causes the algorithm to proceed directly to step 164 and skip the calculations of step 156 (506—509) until after the third cycle of the disturbance signal to allow for a "steady-state" condition to become established. In step 156, the correlated and quadrature draft and command variables, DCOR, DQUA, FCOR and FQUA are calculated and integrated for 8 complete cycles of the disturbance signal. DCOR represents the component of the total value command, HVC1, which is in phase (correlated) with the Walsh function, Wa. DQUA represents the component of the total value command, HVC1, which is in phase (quadrature) with the Walsh function, Wb, FCOR represents the component of the measured draft force which is in phase (correlated) with Walsh function Wa. FQUA represents the component of the sensed draft force which is in phase with (quadrature) Walsh function Wb. It is these values which are used back in previously described step 138 (in particular, in lines (515) and (516), thereof) to calculate the GNSQ and GAIN3 values. Following steps 154 or 156, the algorithm proceeds to step 164.

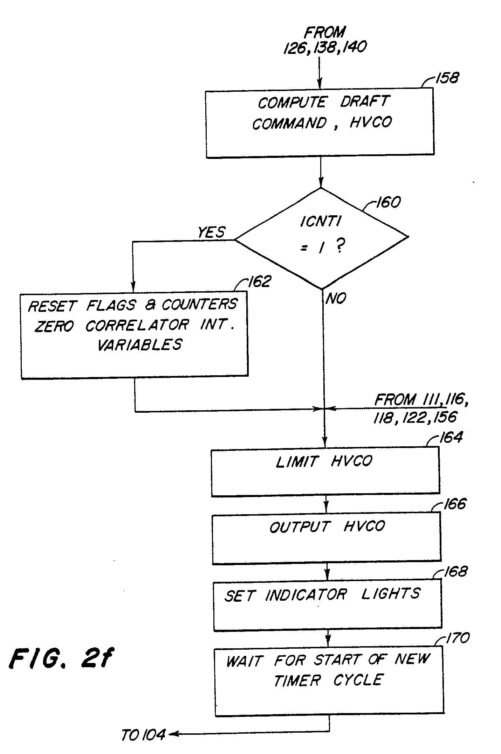

Turning to Figure 2f, line (521), the algorithm proceeds to step 158 during normal draft operation with no disturbance signal applied. In step 158 (521—523), the valve command value, HVCO, is calculated. This HVCO value includes a draft force feedback term (FDRFT—FD0) multiplied by GAIN3 and a position feedback term (ZPOS—A1).

Next, step 160 detects when the proper time has arrived (ICNT1=1) to direct the algorithm to step 162 where various flags and counters are reset and where the correlated and quadrature draft and command variables FCOR, FQUA, DCOR and DQUA are zeroed. At this point, the algorithm is directed to step 164 (534—536) which limits the magnitude of the HVCO value.

Step 166 (546) then causes this HVCO value to be sent to the control valve 26, and step 168 (547) sets a light (not shown) which may be used for program diagnostics.

Finally, step 170 (554—563) causes the algorithm to wait for the start of a new timing cycle before returning to step 104.

Thus, in summary, this algorithm achieves the goal of calculating a soil/implement gain (represented by GNSQ) which represents the ratio of the change in draft force produced by a corresponding change in rockshaft position. The algorithm also makes the electronic gain (GAIN3) of the control system proportional to the inverse of this calculated soil/implement gain to make the overall control system uniformly responsive despite changes in soil characteristics. This is done by periodically superimposing upon the valve control signal, HVCO, a 10-cycle square-wave disturbance signal. The frequency of the disturbance signal is chosen such that the control system can react to it, but such that there is no strong naturally occurring variation at the same frequency (such as soil and terrain variations).

The control valve 26 and the actuator 24 respond to this disturbance signal (with some delay due to the inertia of the system) by producing hitch and implement movement and corresponding draft force variations. The resulting total valve command signal (see lines 502—504) includes a disturbance signal term, a position error term and a draft force error term, all of which should have some components which vary at the frequency of the disturbance signal. Therefore, to determine the overall soil/implement gain, the algorithm determines the draft force components in phase with and in quadrature phase with (FCOR and FQUA) the disturbance signal. The algorithm also determines the components (DCOR and DQUA) of the valve command having the same phase relationship with the disturbance signal. The total soil/implement gain is related to the ratio of the sum of the squares of these draft and valve command values as follows:

$$GNSQ=(FCOR^2+FQUA^2)/(DCOR^2+DQUA^2)$$

The adaptive (electronically varied) gain (GAIN3) is then defined as:

$GAIN3=G2/(GNSQ)^{1/2}$, where G2 is an experimentally determined gain factor of .0005. This GAIN3 value is then used to determine the valve command signals, HVCO, so that the overall system gain or responsivity has the desired stability.

# EP 0 153 102 B1

## TABLE OF VARIABLES

Input variables

| | | |
|---|---|---|
| A(1) | = | Rockshaft position |
| A(2)—A(6) | = | Force on hitch used with A1 to calculate draft |
| A(7) | = | Switch for raise and lower at headland |
| A(9) | = | Rockshaft position command |

Internal variables

| | | |
|---|---|---|
| ADRAFT | = | Draft |
| DCOM | = | Internal rockshaft position command |
| FDRFT | = | Filtered draft |
| FDRF2 | = | Filtered draft used to calculate draft command FDO |
| FDRF3 | = | Filtered draft used in correlator |
| FD0 | = | Calculated draft command |
| PERR | = | Weighted position error |
| HVCO | = | Servo valve command |
| APERR | = | Absolute value of PERR |
| DCOR | = | Component of total valve command in phase with Wa |
| DQUA | = | Component of total valve command in phase with Wb |
| FCOR | = | Component of measured draft in phase with Wa |
| FQUA | = | Component of measured draft in phase with Wb |
| GAIN3 | = | Adaptive gain |
| ZPOS | = | Calculated value of position command |
| LERR | = | Draft error |
| DERR | = | Weighted draft error |
| ASQ | = | Sign of auxiliary input square wave |
| FACT | = | Gain factor |
| ICOR | = | ASQ |
| IQUA | = | Sign of quadrature square wave |
| HVCI | = | Old value (delayed 1 count) of servo valve command |
| GNSQ | = | Square of measured implement/soil gain |

Flags and counters

| | | |
|---|---|---|
| INIT | = | Flag used as safety interlock; INIT=0, Valve command=0.0; INIT=1, (Normal operation) |
| GCHK | = | Flag indicating gain is set |
| ICNT1 | = | Counter—# of counts between gain measurements |
| ICNT2 | = | Counter—# of counts into period of auxiliary waveform |
| ICNT3 | = | Counter—# of counts into measurement cycle |
| IP | = | # of counts in 1 cycle of auxiliary waveform |
| IGT2 | = | Counter used in sensing movement of command knob |
| ISTP2 | = | Counter used in sensing draft & position command |
| LITE | = | Flag indicating position control mode (Lite=0) or draft mode (Lite=2000) |
| IPH | = | Counts in 1/2 cycle of auxiliary waveform |
| IPQ | = | Counts in 1/4 cycle of auxiliary waveform |
| IP3Q | = | Counts in 3/4 cycle of auxiliary waveform |
| IFLAG | = | Flag indicating gain is set, normal draft operation (IFLAG=1) or gain measurement in progress IFLAG=0 |
| IP2 | = | Counts in 2 cycles of auxiliary waveform |

Constants

| | | |
|---|---|---|
| TP1 | = | Draft filter constant |
| TP2 | = | Draft filter constant |
| TP3 | = | Draft filter constant |
| DLV | = | Draft force level used to determine implement entry |
| G1 | = | Amplitude of auxiliary square wave |
| G2 | = | Gain factor used to calculate adaptive gain |

In view of the above-described flow chart, and in view of the Fortran language computer program listing which appears at the end of this description, it will be evident to those skilled in the art to implement the algorithm described in a digital data processor, such as a microprocessor.

```
C  1     BEFORE THE CONTROL ROUTINE IS ACTIVATED, ALL SYSTEM PARAMETERS
C  19    ARE INITIALIZED FROM DISK FILES OR FROM ROM.
```

```
C  20         THE CONTROL ROUTINE IS CALLED WHEN AN INTERRUPT IS
C  76         GENERATED BY AN EXTERNAL TIMER. THE INTERRUPT OCCURS
C  77         AT REGULAR INTERVALS (.01 SECONDS FROM THIS PROGRAM)
C 212         WHEN AN INTERRUPT OCCURS, DATA FROM A/D CONVERTERS IS
C 217         CONVERTED INTO ENGINEERING UNITS AND THE CONTROL
C 276         ROUTINE IS ACTIVATED
C PROCESSING BEGINS HERE
    396       ADRAFT=DRAFT
              WVEL=(A(18)+A(19))*RR
              DCOM=75.0-A(9)
    398       FDRFT=TP1*FDRFT+(1.0-TP1)*ADRAFT
    400       FDRF2=TP3*FDRF2+(1.0-TP3)*ADRAFT
    402       FDRF3=FDRF3*TP2+(1.0-TP2)*ADRAFT
C
C 407             CALCULATE DRAFT SETPOINT
    408       PERR=(DCOM-A(1))*25.0
    409       HVCO=PERR
    410       APERR=ABS(DCOM-A(1))
    411       IF ((INIT .EQ.0).AND.(APERR.GT.2.0)) HVCO=0.0
    412       IF ((INIT.EQ.0).AND.(APERR.GT.2.0)) GO TO 534
    413       INIT=1
C 414             A7 IS THE SWITCH TO LIFT (>50) OR LOWER (<10) THE HITCH
    415       IF(A(7).GT.50.) GO TO 417
    416       GO TO 434
    417       HVCO=25.0*(70.0-A(1))
    418       GCHK=0.
    419       IFLAG=0
              ICNT1=1501
              ICNT2=0
              ICNT3=0
              ISTP2=0
              IGT2=0
              DCOR=0.
              FCOR=0.
              DQUA=0.
              FQUA=0.
              GAIN3=0.
              IDL2=200
    432       LITE=0
    433       GO TO 534
    434       CONTINUE
C                 STAY IN POSITION MODE IF DRAFT <5.0 KN
    436       IF (DRAFT.LT. DLV) GO TO 534
C 437               THE FOLLOWING STATEMENTS SELECT THE DRAFT SETPOINT
C             FIRST, COMPARE THE DEPTH COMMAND TO THE STORED VALUE OF THE DEPTH COMMAND
C                 AND BRANCH IF THE DEPTH KNOB IS NOT CHANGING
    440       IF(ABS(DRCOM-DCOM).LT.1) GO TO 447
C                 WAIT 3 COUNTS TO MAKE SURE DIFFERENCE IS NOT DUE TO NOISE SPIKE
              IF(IGT2.EQ.0) GO TO 473
              IGT2=IGT2-1
              IF(ISTP2.EQ.0) GO TO 534
              GO TO 480
C                 THE NEXT STATEMENT RESETS THE NOISE DELAY
    447       IGT2=3
C                 WAIT 100 COUNTS (1 SECOND) TO SELECT DRAFT SETPOINT
C                 AFTER KNOB STOPS CHANGING- OPERATOR IS HAPPY WITH DEPTH
              IF(IDL2.EQ.0) GO TO 456
C                 DECREMENT DELAY COUNTER
              IDL2=IDL2-1
              GO TO 480
C                 IF ISTP2 EQUALS 1, SETPOINT HAS ALREADY BEEN SELECTED, SO BRANCH TO
C                 DRAFT ERROR CALCULATION
    456       IF(ISTP2.EQ.1) GO TO 485
C                 SET DRAFT COMMAND TO AVERAGE DRAFT
    458       FD0=FDRF2
```

EP 0 153 102 B1

```
C          SET FLAG TO INDICATE THAT SETPOINT HAS BEEN SELECTED
           ISTP2=1
C              INITIALIZE MODEL
           ZPOS=A(1)
           ICNT1=1501
           ICNT2=0
           ICNT3=0
466        IFLAG=0
           FCOR=0.
           FQUA=0.
           DCOR=0.
           GO TO 485
C              DRAFT COMMAND IS BEING CHANGED BY OPERATOR
C              RESET DELAY COUNTER
473        IDL2=200
C              INITIALIZE SLOW DRAFT FILTER
           FDRF2=ADRAFT
C              RESET SETPOINT FLAGS
           ISTP2=0
C              UPDATE STORED VALUE OF DEPTH COMMAND
           DRCOM=DCOM
480        CONTINUE
C              STILL IN POSITION MODE
           DERR=25.0*(DCOM-A(1))
           HVCO=DERR
           GO TO 534
485        ICNT1=ICNT1-1
486        IF(IFLAG.EQ.1) GO TO 521
487        ICNT2=ICNT2+1
488        IF(ICNT2.GT.IP)ICNT2=1
489        ICNT3=ICNT3+1
490        IF(ICNT3.EQ.IP10) GO TO 512
491        (ICNT3.GT.IP10) GO TO 521
492        IF(ICNT2-IPH) 493, 493, 498
493        ASQ=-1
494        ICOR=-1
495        IQUA=-1
496        IF(ICNT2.GT.IPQ)IQUA=1
497        GO TO 502
498        ASQ=1.
499        ICOR=1
500        IQUA=1
501        IF(ICNT2.GT.IP3Q)IQUA=(-1)
502        HVCO=ASQ*G1+25.0*FACT*(ZPOS-A(1))
503        IF(GAIN3.GT.0.)HVCO=2.0*ASQ*G125.0*FACT*((ZPOS-A(1))+
504$       GAIN3*(FDRFT-FD0))
505        IF((ICNT3.LT.IP2))GOTO 510
506        FCOR=FCOR+(FDRF3-FD0)*FLOAT(ICOR)
           FQUA=FQUA+(FDRF3-FD0)*FLOAT(IQUA)
           DCOR=DCOR+HVC1*FLOAT(ICOR)
509        DQUA=DQUA+HVC1*FLOAT (IQUA)
510        CONTINUE
           GO TO 534
512        GCHK=1.0
           LITE=2000
514        IF(ABS(DCOR).LT.0.01)DCOR=0.01
515        GNSQ=(FCOR*FCOR+FQUA*FQUA)/(DCOR*DCOR+DQUA*DQUA)
516        GAIN3=G2/SQRT(GNSQ)
           GDUM=0.01/SQRT(GNSQ)
           ASQ=0.
519        IFLAG=1
C              CALCULATE DRAFT ERROR BASED ON DRAFT SETPOINT, INCLUDE SLIP ERROR
521        LERR=(FD0-FDRFT)*(-1.0)
522        DERR=(GAIN3*LERR+ZPOS-A(1))*25.0*FACT
523        HFCO=DERR
```

7

```
524      IF(ICNT1.EQ.1) GO TO 526
525      GO TO 534
526      ICNT1=1501
         ICNT2=0
         ICNT3=0
529      IFLAG=0
         FCOR=0.
         FQUA=0.
         DCOR=0.
533      DQUA=0.
534      CONTINUE
535      IF(HVCO.GT.4000) HVCO=4000
536      IF(HVCO.LT.-4000) HVCO=-4000
         HVC1=HVCO
20       HVCO=OFSET-HVCO
25       IF(HVCO.GT.2000.) HVCO=2000.
         IF(HVCO.LT.-2000.) HVCO=(-2000.)
546      ODAT(2)=HVCO
547      ODAT(3)=LITE
C
C 554            OUTPUT BEGINS HERE
C THE OUTPUT ROUTINE CONVERTS THE VALVE CONTROL, HVCO, GENERATED BY THE
C CONTROL ROUTINE INTO A COMMAND TO THE D/A CONVERTER. THE
C ANALOG VOLTAGE FROM THE D/A CONVERTER IS THEN AMPLIFIED BY
C 563     EXTERNAL ELECTRONICS AND APPLIED TO THE SERVO VALVE.
C
```

**Claims**

1. A depth control system for a vehicle (10) pulling a ground working implement (14), comprising a servo-system (50) responsive to at least one sensed operating parameter of the system comprising the implement and means (12) connecting the implement to the vehicle to provide a control signal (HVCO) to control actuating means (26, 24) which adjust the working depth of the implement, characterised in that the servo system (50) is arranged to superimpose upon the control signal (HVCO) a periodic, time-varying auxiliary signal, to determine automatically a response characteristic of the servo system (50) and actuating means (26, 24) to the auxiliary signal, the response characteristic having a certain frequency relationship to the auxiliary signal, and automatically to adjust a variable gain (GAIN3) which influences the control signal (HVCO) in response to changes in the response characteristic.

2. A control system according to claim 1, characterised in that the auxiliary signal is intermittently superimposed upon the control signal for a limited duration.

3. A control system according to claim 2, characterised in that a determination of the response characteristic is periodically initiated a predetermined time after initiation of the superimposing of the auxiliary signal.

4. A control system according to claim 3, characterised in that the servo system (50) integrates values representing the response characteristic for a predetermined time period.

5. A control system according to any of claims 1 to 4, characterised in that the auxiliary signal comprises a squarewave pulse train of certain frequency and duration.

6. A control system according to any of claims 1 to 5, characterised by draft force sensing means (16) for sensing draft forces produced by implement-ground interaction and position sensing means (28) for sensing implement position, the servo system (50) generating the control signal (HVCO) as a function of the sensed position, the sensed draft force and the variable gain (GAIN3).

7. A control system according to claim 6, characterised in that the response characteristic is determined by determining a first draft force component (FCOR) in phase with the auxiliary signal, determining a second draft force component (FQUA) having a quadrature phase relationship to the auxiliary signal, determining a first control signal component (DCOR) in phase with the auxiliary signal, determining a second control signal component (DQNA) having a quadrature phase relationship with the auxiliary signal, and deriving a ratio of a sum of squares of the first and second draft force components to a sum of squares of the first and second control signal components.

8. A control system according to any of claims 1 to 7, characterised in that the variable gain (GAIN3) is set proportional to an inverse of a value (GNSQ) representing the response characteristic.

9. A control system according to any of claims 1 to 8, characterised by an operator-controlled device (34) for generating a position signal representing a desired position of the implement; a position sensor (28) for sensing implement position; and a draft sensor (16) for sensing draft force produced by implement-ground interaction, the servo system having a position control mode wherein the implement is controlled primarily as a function of the operator-controlled device and the sensed implement position and having a draft control mode wherein the implement is controlled primarily as a function of the sensed draft force, the servo system varying the magnitude of the auxiliary signal as a function of which control mode is operating.

10. A control system according to claim 9, characterised in that the auxiliary signal magnitude superimposed during draft control mode operation is larger than the auxiliary signal magnitude superimposed during position control mode operation.

**Patentansprüche**

1. Tiefenkontrollsystem für ein Fahrzeug (10), das ein Bodenbearbeitungsgerät (14) nachzieht, mit einem Servosystem (50), das auf wenigsens einen ertasteten Arbeitsparameter des das Gerät und Mittel (12) zum Verbinden des Gerätes mit dem Fahrzeug aufweisenden Systems anspricht, und ein Kontrollsignal (HVCO) zur Steuerung von Betätigungsmitteln (26, 24) liefert, welche die Arbeitstiefe des Gerätes einstellen, dadurch gekennzeichnet, daß das Servo-System (50) so angeordnet ist, daß es dem Kontrollsignal (HVCO) ein periodisch zeitvariierendes Hilfssignal aufdrückt, um automatisch eine Ansprechcharakteristik des Servosystems (50) und der Betätigungsmittel (26, 24) auf das Hilfssignal zu bestimmen, wobei die Ansprechcharakteristik eine bestimmte Frequenzbeziehung zu dem Hilfssignal hat, und um automatisch einen veränderten Verstärkungsfaktor (GAIN3) einzustellen, der das Kontrollsignal (HVCO) in Abhängigkeit von Veränderungen in der Ansprechcharakteristik beeinfluß.

2. Steuersystem nach Anspruch 1, dadurch gekennzeichnet, daß das Hilfssignal intermittierend dem Kontrollsignal für eine begrenzte Dauer aufgedrückt wird.

3. Kontrollsystem nach Anspruch 2, dadurch gekennzeichnet, daß eine Bestimmung der Ansprechcharakteristik periodisch eine vorbestimmte Zeit nach Auslösung des Aufdrückens des Hilfssignals veranlaßt wird.

4. Kontrollsystem nach Anspruch 3, dadurch gekennzeichnet, daß das Servosystem (50) Werte integriert, welche die Ansprechcharakteristik einer vorbestimmten Zeitperiode repräsentieren.

5. Steuersystem nach irgendeinem der Ansprüche 1 bis 4, dadurch gekennzeichnet, daß das Hilfssignal einen Rechteckwellen-Impulszug von bestimmter Frequenz und Dauer umfaßt.

6. Kontrollsystem nach irgendeinem der Ansprüche 1 bis 5, gekennzeichnet durch Zugkraftfühlmittel (16) zum Ertasten der Zugkräfte, die durch die Interaktion zwischen Gerät und Boden erzeugt wird, sowie Stellungsfühlermittel (28) zum Ertasten der Stellung des Gerätes, wobei das Servosystem (50) das Kontrollsignal (HVCO) als eine Funktion der ertasteten Stellung, der ertasteten Zugkraft und des variablen Verstärkungsfaktors (GAIN3) erzeugt.

7. Kontrollsystem nach Anspruch 6, dadurch gekennzeichnet, daß die Ansprechcharakteristik dadurch bestimmt wird, daß eine erste Zugkraftkomponente (FCOR) in Phase mit dem Hilfssignal bestimmt wird, eine zweite Zugkraftkomponente (FQUA) mit einer Rechteckphasenbeziehung zu dem Hilfssignal bestimmt wird, eine erste Kontrollsignalkomponente (DCOR) in Phase mit dem Hilfssignal bestimmt wird, eine zweite Kontrollsignalkomponente (DQNA) mit einer Rechteckphasenbeziehung zu dem Hilfssignal bestimmt wird, und daß man ein Verhältnis zwischen einer Quadratsumme der ersten und zweiten Zugkraftkomponente und einer Quadratsumme der ersten und zweiten Kontrollsignalkomponenten ableitet.

8. Steuersystem nach irgendeinem der Ansprüche 1 bis 7, dadurch gekennzeichnet, daß der veränderliche Verstärkungsfaktor (GAIN3) proportional dem Kehrwert eines Wertes (GNSQ) eingestellt wird, welcher die Ansprechcharakteristik repräsentiert.

9. Kontrollsystem nach irgendeinem der Ansprüche 1 bis 8, gekennzeichnet durch eine von der Bedienungsperson kontrollierte Vorrichtung (34) zum Erzeugen eines Stellungssignals, welches eine gewünschte Stellung des Gerätes wiedergibt; einen Stellungsfühler (28) zum Fühlen der Gerätestellung; und einem Zugfühler (16) zum Ertasten der Zugkraft, welche durch die Interaktion zwischen Gerät und Boden erzeugt wird, wobei das Servosystem einen Stellungskontrollmodus aufweist, in dem das Gerät primär in Abhängigkeit von der von der Bedienungsperson kontrollierten Vorrichtung und von der ertasteten Stellung des Gerätes kontrolliert wird, sowie einen Zugkontrollmodus, in dem das Gerät primär in Abhängigkeit von der ertasteten Zugkraft kontrolliert wird, wobei das Servosystem die Größe des Hilfssignals in Abhängigkeit von dem sich in Wirkung befindlichen Kontrollmodus variiert.

10. Kontrollsystem nach Anspruch 9, dadurch gekennzeichnet, daß die Größe des Hilfssignals, die während des Betriebes im Zugkraftkontrollmodus aufgedrückt wird, größer ist, als die Größe des Hilfssignals, das während des Betriebes des Stellungskontrollmodus aufgedrückt wird.

**Revendications**

1. Système de réglage de profondeur pour un véhicule (10) tractant un outil de travail du sol (14), comprenant un servo-système (50) qui répond à au moins un paramètre détecté de fonctionnement du système, constitué par l'outil et des moyens (12) de liaison de l'outil au véhicule, pour fournir un signal de commande (HVCO) afin de commander des moyens de manoeuvre (26, 24) qui ajustent la profondeur de travail de l'outil, caractérisé en ce que le servo-système (50) est prévu pour superposer au signal de commande (HVCO) un signal auxiliaire périodique variant dans le temps, pour déterminer automatiquement une caractéristique de réponse du servo-système (50) et des moyens de manoeuvre (26, 24) au signal auxiliaire, la caractéristique de réponse ayant une certaine relation de fréquence avec le signal auxiliaire, et pour corriger automatiquement un gain variable (GAIN3) qui influence le signal de commande (HVCO) en réponse à des changements dans la caractéristique de réponse.

2. Système de réglage suivant la revendication 1, caractérisé en ce que le signal auxiliaire est superposé de façon intermittente au signal de commande, pendant une durée limitée.

3. Système de réglage suivant la revendication 2, caractérisé en ce qu'une détermination de la caractéristique de réponse est déclenchée périodiquement, à un moment prédéterminé après le début de la superposition du signal auxiliaire.

4. Système de réglage suivant la revendication 3, caractérisé en ce que le servo-système (50) intègre les valeurs representant la caractéristique de réponse pendant un laps de temps prédéterminé.

5. Système de réglage suivant l'une quelconque des revendications 1 à 4, caractérisé en ce que le signal auxiliaire comprend un train d'impulsions à onde carrée d'une certaine fréquence et d'une certaine durée.

6. Système de réglage suivant l'une quelconque des revendications 1 à 5, caractérisé par des moyens de détection de force de traction (16), pour détecter les forces de traction produites par l'interaction outil-sol, et des moyens de détection de position (28) pour détecter la position de l'outil, le servo-système (50) générant le signal de commande (HVCO) comme une fonction de la position détectée, de la force de traction détectée et du gain variable (GAIN3).

7. Système de réglage suivant la revendication 6, caractérisé en ce que la caractéristique de réponse est déterminée par détermination d'une première composante de force de traction (FCOR) en phase avec le signal auxiliaire, détermination d'une deuxième composant de force de traction (FQUA) en quadrature de phase avec le signal auxiliaire, détermination d'une première composant ede signal de commande (DCOR) en phase avec le signal auxiliaire, détermination d'une deuxième composante de signal de commande (DQNA) en quadrature de phase avec le signal auxiliaire, et établissement d'un rapport d'une somme des carrés des première et deuxième composantes de force de traction à une somme des carrés des première et deuxième composantes de signal de commande.

8. Système de réglage suivant l'une quelconque des revendications 1 à 7, caractérisé en ce que le gain variable (GAIN3) est fixé proportionnellement à un inverse d'une valeur (GNSQ) représentant la caractéristique de réponse.

9. Système de réglage suivant l'une quelconque des revendications 1 à 8, caractérisé par un dispositif (34) commandé par l'opérateur pour générer un signal de position représentant une position désirée de l'outil; un capteur de position (28) pour détecter la position de l'outil; et un capteur de traction (16) pour détecter la force de traction produite par l'interaction outil-sol, le servo-système ayant un mode de commande de position, dans lequel l'outil est commandé principalement en fonction du dispositif commandé par l'opérateur et de la position d'outil détectée, et ayant un mode de commande de traction dans lequel l'outil est commandé principalement en fonction de la force de traction détectée, le servo-système modifiant l'amplitude du signal auxiliaire selon le mode de commande qui est en service.

10. Système de réglage suivant la revendication 9, caractérisé en ce que l'amplitude du signal auxiliaire superposée pendant le fonctionnement en mode de commande de traction est plus grande que l'amplitude du signal auxiliaire superposée pendant le fonctionnement en mode de commande de position.

FIG. 1

1

START ⌐100

INITIALIZE STATES, READ & SET PARAMETERS ⌐102

FROM 170

SAMPLE SENSED VARI-ABLES & SCALE ⌐104

FILTER DRAFT SIGNAL ⌐106

COMPUTE PERR & APERR ⌐108

TEST INIT & APERR ⌐110

HVCO = 0 ⌐111

TO 164

INIT = 1 ⌐112

TO 114

**FIG. 2a.**

FROM 112

LIFT SWITCH
= RAISE ? ——— 114

YES

NO

COMPUTE HVCO,
SET FLAGS &
COUNTERS ——— 116

TO 164

PLOW
IN GROUND ? ——— 118

YES → TO 164

NO

SELECT
OPERATING MODE ——— 120

POSITION MODE

DRAFT MODE

COMPUTE DERR,
HVCO ——— 122

TO 164

INCTI = INCTI - 1 ——— 124

TO 126

*FIG. 2b*

EP 0 153 102 B1

FROM 124

TIME TO
APPLY DISTURBANCE
SIGNAL ? — 126

NO

TO 158

YES

ICNT2 = ICNT2 + 1 — 128

ICNT2
>
IP ? — 130

YES

NO

ICNT2 = 1 — 132

*FIG. 2c*

ICNT3 = ICNT3 + 1 — 134

DIST. SIG.
DURATION EXPIRED
? — 136

YES

NO

TO 138

TO 140

4

FROM 136

COMPUTE SQUARE OF
S/I GAIN - SET
FLAGS — COMPUTE
SERIES GAIN FOR
S/I GAIN CHANGE
/138

TO 158

FROM 136

/140
ICNT3
> IPIO ?
YES → TO 158
NO

/142
ICNT2
> IPH ?
YES
NO

/144
ASQ = 1
ICOR = 1
IQUA = 1

/148
ASQ = -1
ICOR = -1
IQUA = -1

/146
IF (ICNT2 .GT. IPQ)
IQUA = -1

150
IF (ICNT2 .GT. IP3Q)
IQUA = 1

TO 152

5

FROM 146,150

┌─────────────────────────┐ /152
│    ADD DISTURBANCE      │
│  SIGNAL TO POSITION OR  │
│     DRAFT COMMAND       │
└─────────────────────────┘

/154

YES ◇ ICNT2 < IP2 ? ◇

NO

┌─────────────────────────┐ /156
│  COMPUTE CORRELATED     │
│  DRAFT, QUADRATURE      │
│  DRAFT, CORRELATED      │
│  COMMAND & QUADRATURE   │
│  COMMAND                │
└─────────────────────────┘

TO 164

# FIG. 2e

FROM
126, 138, 140

COMPUTE DRAFT
COMMAND , HVCO
— 158

ICNTI
= 1 ?
— 160

YES

NO

RESET FLAGS & COUNTERS
ZERO CORRELATOR INT.
VARIABLES
— 162

FROM 111, 116,
118, 122, 156

LIMIT HVCO
— 164

OUTPUT HVCO
— 166

SET INDICATOR LIGHTS
— 168

WAIT FOR START OF NEW
TIMER CYCLE
— 170

TO 104

FIG. 2f

7

FIG. 3

DISTURBANCE SIGNAL
PULSE TRAIN

t = 0

t = 6 sec.

t = 15 sec.

ICNTI = 1501

ICNT3 = 0

ICNT3 = IPIO

ICNTI = 1

ICNT3 = 0

8